# EUROPÄISCHE PATENTSCHRIFT

(11) **EP 2 870 434 B1**
(45) Veröffentlichungstag und Bekanntmachung des Hinweises auf die Patenterteilung: **22.08.2018**
(21) Anmeldenummer: 13739157.9
(22) Anmeldetag: 29.06.2013
(51) Int. Cl.: G01D 5/12, G01D 11/30, G01C 9/02, G01C 9/06

(54) **FAHRZEUGNIVEAUSENSOR**
VEHICLE LEVEL SENSOR
CAPTEUR DE NIVEAU DE VÉHICULE

(30) Priorität: 05.07.2012 DE 102012106021
(43) Veröffentlichungstag der Anmeldung: 13.05.2015
(73) Patentinhaber: HELLA GmbH & Co. KGaA, 59552 Lippstadt (DE)
(72) Erfinder: BARTSCHT, Manfred, 33154 Salzkotten (DE); ELPERMANN, Thomas, 48291 Telgte (DE); WIRRIES, Eckart, 59556 Lippstadt (DE)
(86) Internationale Anmeldenummer: PCT/EP2013/063763
(87) Internationale Veröffentlichungsnummer: WO 2014/005964

(56) Entgegenhaltungen:
- EP-A2- 0 943 469
- EP-A2- 1 376 077
- DE-A1-102010 009 497
- DE-B3-102011 118 775
- DE-C1- 19 733 719
- US-A1- 2004 257 068

## Beschreibung

Die Erfindung betrifft einen Niveausensor für ein Kraftfahrzeug, umfassend ein Gehäuse, einen an dem Gehäuse drehbar gelagerter Rotor, eine von dem Gehäuse umschlossene Leiterplatte, die zumindest einen Stator umfasst.

Solche Niveausensoren sind an sich bekannt und werden überwiegend in Kraftfahrzeugen eingesetzt, um Dreh- oder Verschiebebewegungen zweier Teile relativ zueinander zu ermitteln, z.B. zur Erfassung einer Schräglage des Kraftfahrzeugs und zur entsprechenden Regelung von Scheinwerfern.

Die EP 1 376 077 A2 offenbart einen Füllstandgeber für Flüssigkeitsbehälter mit einem Schwimmer. Ein dem Schwimmer zugeordneter Sensor arbeitet mit Hilfe eines Ringmagneten.

Aus der US 2004/0257068 A1 ist ein elektrischer Drehschalter bekannt, der mit einem Magneten und einem Magnetfeldsensor arbeitet. Der Drehschalter ist für die Bestimmung von Drehwinkeln zu ungenau.

In der DE 10 2010 009 497 A1 ist ein Drehsensor beschrieben, der eine während einer Montage wirksame Verdrehsicherung für einen Rotor relativ zu einem Gehäuse aufweist.

Die EP 943 469 A beschreibt einen Sensor, bei dem zwei Leiterplatten in einem Gehäuse angeordnet sind. Hier ist wegen eines großen Deckels und wegen einer Öffnung zum Rotor die Abdichtung des Gehäuses sehr aufwendig. Der Rotor umfasst eine Welle aus Metall und ist insgesamt aus relativ vielen Einzelteilen zusammengesetzt. Herstellung und Montage des Sensors sind entsprechend teuer.

In der DE 19733719 C1 ist ein Sensor offenbart, bei dem ein Rotor mittels eines Kugelgelenks mit einem Gehäuse verbunden ist. Zwischen dem Rotor und dem Gehäuse ist eine Dichtung angeordnet. Die Konstruktion ist relativ aufwendig; ein Spiel zwischen den Teilen lässt sich nicht vollständig vermeiden, was entsprechend nachteilig für die gegenseitige Positionierung eines Stators und einer Rotorstruktur ist.

Es ist daher die Aufgabe der Erfindung, einen Niveausensor zu schaffen, bei dem ein Rotor einfach an einem Gehäuse zu lagern ist und hierbei praktisch kein Spiel vorhanden ist, so dass eine relative Position eines Stators zu einer Rotorkonstruktion weitestgehend exakt eingehalten wird. Insgesamt soll der Sensor preiswert herzustellen sein.

Die Aufgabe ist durch die Merkmale des Anspruchs 1 gelöst. Das Gehäuse weist einen außen angeformten Zylinder mit kreisringförmigem Querschnitt auf. Hierbei ist der Zylinder auf einer Wandung des Gehäuses angeordnet, so dass er hier durch einen Zylinderboden geschlossen ist. Das Gehäuse ist also gegen den Zylinder dicht, so dass eine in dem Gehäuse angeordnete Elektronik gegen von außen eindringende Feuchtigkeit und Schmutz geschützt ist. Das Gehäuse mit dem Zylinder kann einfach z.B. aus Kunststoff im Spritzguss gefertigt werden.

Der Rotor ist mit Ausnahme einer Rotorstruktur aus Kunststoff gefertigt. Auch der Rotor lässt sich einfach im Spritzguss herstellen; die Rotorstruktur wird an einer vorbestimmten Position des Rotors befestigt.

Der Rotor ist in dem Zylinder geführt und mit diesem verrastet. Auf diese Weise ist die Rotorstruktur sicher in einer vorbestimmten Position relativ zu einem Stator zu halten. Die Montage des Rotors an dem Gehäuse ist einfach durch Eindrücken in den Zylinder bis zum Verrasten der Rastelemente zu bewirken; zusätzliche Befestigungsteile sind nicht erforderlich.

Insgesamt lässt sich der Niveausensor preiswert herstellen.

Die abhängigen Ansprüche betreffen die vorteilhafte Ausgestaltung der Erfindung.

In einer Ausgestaltung ist außen an dem Zylinder eine ringförmige Rastnut eingelassen. In Verbindung mit einer entsprechenden Rastnase an dem Rotor ist dieser sicher für Drehbewegungen geführt und gleichzeitig in einer vorbestimmten Lage in dem Zylinder festgelegt und verspannt.

In einer weiteren Ausgestaltung ist an einem oberen, der Rotorstruktur abgewandten Ende des Rotors außen ein Rohrstück angeformt, das an seinem unteren Ende eine mit der Rastnut korrespondierende Rastnase aufweist. Das Rohrstück ist also über einen Teil des Zylinders gestülpt und dichtet diesen somit nach außen ab. So ergibt sich eine zusätzliche Führung, wobei Abmessungen derart gewählt sind, dass die Rastnase mit vorbestimmter Vorspannung in der Rastnut gelagert ist.

In einer weiteren Ausgestaltung ist der Rotor aus einem Kunststoff mit einem Anteil an eingebettetem Schmierstoff gefertigt; dieser Schmierstoff ist ein Kunststoff mit einem besonders niedrigen Reibungswert wie z.B. PTFE. Hierdurch wird die Reibung zwischen dem Rotor und dem Zylinder verringert.

In einer weiteren Ausgestaltung ist an einer Innenwand des Zylinders mindestens eine erste Stufe gebildet.
Weiterhin kann an einem Mantel eines zylindrischen Teils des Rotors mindestens eine zweite Stufe gebildet sein.
Hierdurch können Fertigungstoleranzen besser ausgeglichen werden, so dass die Führung des Rotors in dem Zylinder weiter verbessert wird.

In einer weiteren Ausgestaltung sind in dem zylindrischen Teil Rippen ausgebildet. Dies bewirkt eine Verstärkung, so dass der zylindrische Teil mit einer geringeren Wandstärke ausgeführt sein kann. Insgesamt wird also Material eingespart.

In einer weiteren Ausgestaltung sind Flächen, an denen sich der Zylinder und der Rotor berühren, mit einem Schmiermittel versehen. Hierdurch wird Reibung weiter vermindert.

In einer weiteren Ausgestaltung ist auf einem oberen Ende des Zylinders und in einem Übergang zwischen dem zylindrischen Teil (2a) und dem Rohrstück jeweils ein ringförmiger Nocken angeformt. Hierdurch wird verhindert, dass beim Einpressen der Rotor zu tief in den Zylinder gedrückt wird und dabei ein Teil des Gehäuses, der einem Boden des Rotors gegenüber liegt, zerstört wird.

Anhand der beigefügten Zeichnungen wird die Erfindung nachfolgend näher erläutert. Dabei zeigt:
- Figur 1: eine perspektivische Explosionsansicht eines Niveausensors,
- Figur 2: einen vertikalen Schnitt durch den Niveausensor
- Figur 3: einen vertikalen Schnitt durch einen Zylinder und Rotor als Detail und
- Figur 4: einen Schnitt eines Details eines zweiten Ausführungsbeispiels.

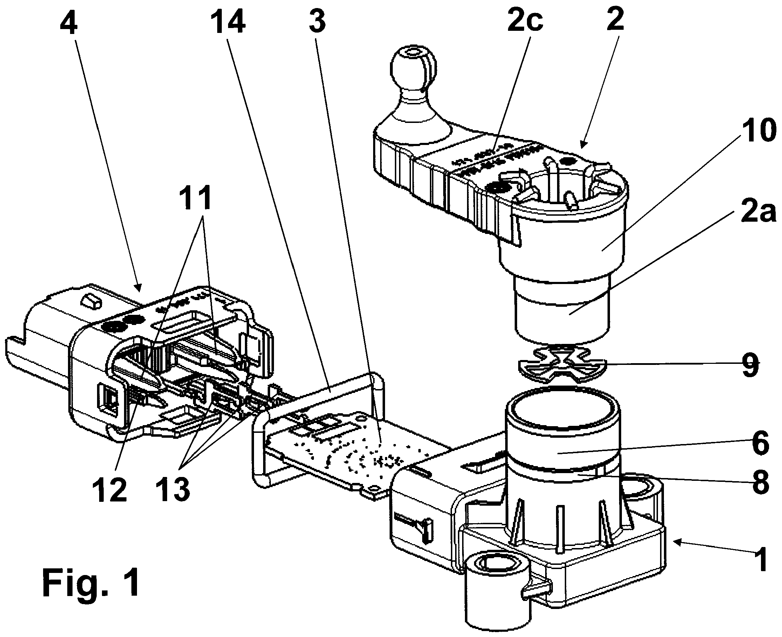

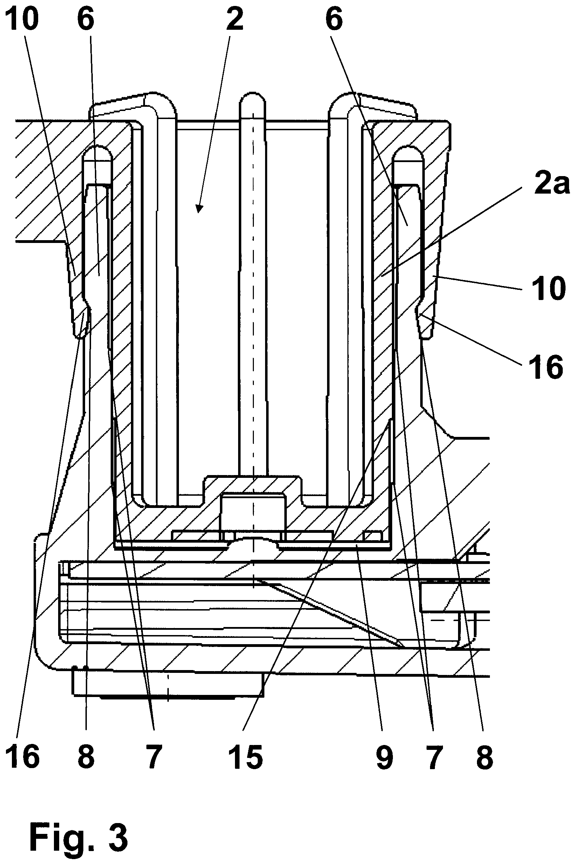

Wie aus den Figuren 1 bis 3 ersichtlich umfasst ein Niveausensor eines ersten Ausführungsbeispiels ein Gehäuse 1, einen Rotor 2, eine Leiterplatte 3 und einen Stecker 4.

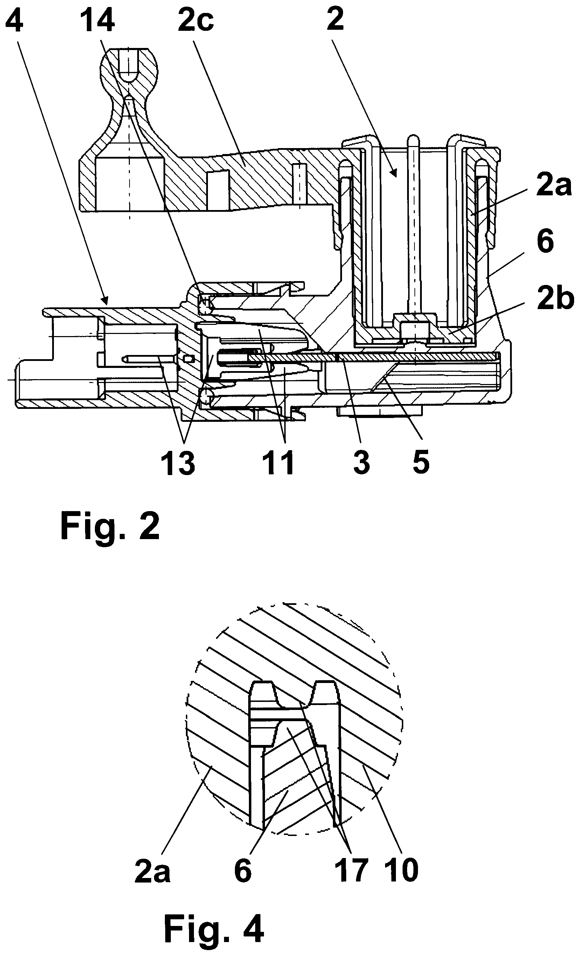

Das Gehäuse 1 umfasst eine Kammer 5 und einen außen auf einer Wandung der Kammer 5 angeformten Zylinder 6 mit kreisringförmigem Querschnitt. Die Kammer 5 ist mit Ausnahme einer an einer Breitseite des Gehäuses 1 angeordneten Öffnung allseitig geschlossen. Die Kammer 5 ist im horizontalen Schnitt im Wesentlichen rechteckig; sie weist im Längsschnitt zwei unterschiedliche Höhen auf, wie aus der Figur 2 besonders gut ersichtlich ist. Die kleinere Höhe ist dabei dem Zylinder 6 und die größere Höhe der Öffnung zugeordnet; mit anderen Worten: der Zylinder 6 ist über dem Teil der Kammer 5 mit dem kleineren Querschnitt angeordnet und die Öffnung weist den größeren Querschnitt auf.

Innen in der Kammer 5 sind an Längsseiten des Teils der kleineren Höhe Führungsrampen ausgebildet, die von der Öffnung aus gesehen zunächst schräg nach oben, das ist in Richtung des Zylinders 6, verlaufen und sich dann in vorbestimmter Höhe parallel zu der oberen Begrenzung der Kammer 5 erstrecken. Hierbei entspricht ein lichter Abstand zwischen der oberen Begrenzung und den Führungsrampen einer Dicke der Leiterplatte 3 zuzüglich eines vorbestimmten Spiels. Auf diese Weise ist der erforderliche Abstand zwischen dem Rotor 2 und einem Stator gewährleistet. Auf der oberen Begrenzung zugewandten Flächen der Führungsrampen sind deformierbare Strukturen z.B. in Form von dünnen Lamellen ausgebildet.

Der Zylinder 6 weist innen auf seiner Wand zwei ringförmige Stufen 7 auf. Diese sind so ausgebildet, dass sich der Querschnitt des Zylinders 6 von einem oberen offenen Ende zu einem durch die Wandung der Kammer 5 geschlossenen Ende hin mit jeder der Stufen 7 geringfügig verkleinert. Zentrisch auf dem geschlossenen Ende ist eine kleine Erhebung in Form einer Kugelkappe ausgebildet.

Außen auf der Wand des Zylinders 6 ist eine ringförmige Rastnut 8 eingelassen. Die Rastnut 8 ist in einem unteren Bereich der oberen Hälfte des Zylinders 6 angeordnet. Ein Querschnitt der Rastnut 8 ist in etwa in Form eines flachen ungleichschenkligen Dreiecks, wobei der untere längere Schenkel des Dreiecks ungefähr dreimal so lang ist wie der kürzere obere Schenkel.
Eine Verbindung des Zylinders 6 zu der Wandung der Kammer 5 ist durch Stützrippen verstärkt, die außen einstückig mit der Wandung und einem unteren Bereich des Zylinders 6 gebildet sind.

Der Rotor 2 weist einen zylindrischen Teil 2a mit einem Boden 2b auf. An einem dem Boden 2b gegenüber liegenden oberen Ende des zylindrischen Teils 2a ist ein Hebelarm 2c angeformt. Zur Verstärkung des zylindrischen Teils 2a sind in diesem Rippen ausgebildet. An einer Außenseite des Bodens 2b ist eine Rotorstruktur 9 angeordnet. Diese ist hier z.B. in Form eines gestanzten Blechs oder einer Leiterbahnfolie befestigt. Außen an dem zylindrischen Teil 2a ist eine ringförmige zweite Stufe 15 so angeordnet, dass der Außendurchmesser des zylindrischen Teils zum Boden 2b hin abnimmt.
Der zylindrische Teil 2a des Rotors 2 ist drehbar in dem Zylinder 6 des Gehäuses 1 gelagert und verrastet. Hierfür ist an dem oberen Ende des zylindrischen Teils 2a ein Rohrstück 10 derart angeformt, dass es mit Abstand einen oberen Bereich des zylindrischen Teils 2a umgibt. Der Abstand entspricht der Wanddicke des Zylinders 6 zuzüglich eines vorbestimmten Spiels. An einem unteren Ende des Rohrstücks 10 ist eine umlaufende Rastnase 16 so ausgebildet, dass sie nach innen weist und mit der Rastnut 8 korrespondiert. Zwischen der Rastnut 8 und der Rastnase 16 besteht kein Spiel sondern eine leichte Vorspannung.

Der Rotor 2 mit dem Rohrstück 10 ist aus Kunststoff mit eingebettetem PTFE gefertigt.

Die ersten und zweiten Stufen 7, 15 bewirken einerseits eine sichere Führung des Rotors 2 in dem Zylinder 6 mit minimal möglichen Spiel und vermindern anderseits die Reibung.

Zur weiteren Verminderung der Reibung sind Flächen, an denen sich der Rotor 2 und der Zylinder 6 berühren, mit einem Schmiermittel versehen, z.B. mit Silikonfett. Diese Flächen sind insbesondere die Rastnut 8 und Teile der Innenfläche des Zylinders 6.

Die Leiterplatte 3 weist den Stator in Form von Leiterbahnstrukturen sowie elektrische und/oder elektronische Bauteile auf, wobei in montiertem Zustand der Stator mit der Rotorstruktur 9 korrespondiert.

Der Stecker 4 ist gleichzeitig als Deckel für die Öffnung der Kammer 5 ausgebildet. Die entsprechende Seite des Steckers 4 ist daher so ausgebildet, dass er hiermit im Bereich der Öffnung mit geringem Spiel über das Gehäuse 1 gestülpt werden kann.
Der Stecker 4 und das Gehäuse 1 sind miteinander verrastbar, wobei an dem Stecker 4 Rasthaken und an dem Gehäuse 1 korrespondierende Rastnasen angeordnet sind. In dem deckelartigen Teil des Steckers 4 ist die Leiterplatte 3 befestigt und kontaktiert. Hierfür sind zwei Haltezungen 11, zwei Haltefinger 12 und drei Kontaktzungen 13 deckelseitig in dem Stecker 4 angeordnet.
Die Haltezungen 11 und die Haltefinger 12 sind einstückig mit dem Stecker 4 geformt. Jede Haltezunge 11 weist zentrisch einen Schlitz auf, so dass sie einen Randbereich der Leiterplatte 3 klemmend umfassen kann. Die Haltefinger 12 dienen der seitlichen Führung und Positionierung der Leiterplatte 3 in dem Stecker 4.
Die Kontaktzungen 13 sind aus Metall gefertigt und in dem Stecker 4 befestigt. Deckelseitig weist jede Kontaktzunge 13 wie die Haltezungen 11 Schlitze auf, wobei die so gebildeten Finger an ihren freien Enden aufeinander zuweisend gebogen sind. Diese freien Enden kontaktieren klemmend zugeordnete Kontaktflächen auf der Leiterplatte 3. Steckerseitig sind die Kontaktzungen 13 für übliche Steckverbinder ausgebildet.

Zur Abdichtung der Kammer 5 ist im Bereich der Öffnung 7 ein O-Ring 14 oder eine Formdichtung zwischen dem Gehäuse 1 und dem Stecker 4 angeordnet.

Ein zweites Ausführungsbeispiel ist in der Figur 4 dargestellt, wobei nur das obere Ende des Zylinders 6 sowie ein angrenzender Teil des Rotors 2 als Detail vergößert dargestellt sind. Das zweite Ausführungsbeispiel unterscheidet sich von dem ersten lediglich dadurch, dass auf dem oberen freien Ende des Zylinders 6 nach oben weisend und in einem Übergang zwischen dem zylindrischen Teil 2a und dem Rohrstück 10 nach unten weisend jeweils ein ringförmiger Nocken 17 angeformt ist. Der Nocken 17 ist im Querschnitt trapezförmig und erstreckt sich über den gesamten Umfang des Zylinders 6 beziehungsweise des Übergangs. Die Nocken 17 liegen sich - bei korrekt montiertem Rotor 2 mit geringem Abstand - gegenüber.

Zur Fertigung des Niveausensors werden zunächst die Einzelteile hergestellt. Das Gehäuse 1, der Rotor 2 und der Stecker 4 werden separat aus Kunststoff gespritzt, wobei die Kontaktzungen 13 in dem Stecker 4 befestigt werden. Die Rotorstruktur 10 wird entweder durch das Spritzen des Rotors 2 oder nach dem Spritzen an dessen Boden 2b befestigt.

Die Leiterplatte 3 wird an dem Stecker 4 befestigt, indem sie mit einer vorbestimmten Seite in die Schlitze geschoben wird, bis sie eine durch die Haltefinger 12 und Anschläge vorbestimmte Position einnimmt. Hierbei ist die Leiterplatte 3 klemmend an dem Stecker 4 gehalten. Die Kontaktzungen 13 kontaktieren die zugeordneten Kontaktflächen der Leiterplatte 3.

Der Stecker 4 mit der Leiterplatte 3 wird an dem Gehäuse 1 befestigt. Hierfür wird die Leiterplatte 3 durch die Öffnung in die Kammer 5 geschoben, wobei Randbereiche der Leiterplatte 3 über die Führungsrampen gleiten und hier gegebenenfalls die deformierbaren Strukturen verformen. Die Haltefinger 12 gleiten entlang der Rippen 15 und werden so gegen die Leiterplatte 3 gepresst. Auch hierbei werden gegebenenfalls die deformierbaren Strukturen verformt. Die deformierbaren Strukturen verhindern so ein Spiel zwischen der Leiterplatte 3 und den diese haltenden Mitteln, dass der Stator exakt eine vorbestimmte Position einnimmt. Die Rasthaken des Steckers 4 verrasten mit den Rastnasen des Gehäuses 1, so dass dieses sicher und dicht verschlossen ist.

Die Rastnut 8 und vorbestimmte Teile der Innenfläche des Zylinders 6 werden mit dem Schmiermittel bestrichen. Dann wird der zylindrische Teil des Rotors 2 in den Zylinder 6 des Gehäuses 1 gedrückt und verrastet. Hierbei nehmen die Rotorstruktur 10 und der Stator vorbestimmte relative Positionen ein, die für die einwandfreie Funktion des Niveausensors erforderlich sind.

### Bezugszeichenliste

- 1: Gehäuse
- 2: Rotor
- 2a: zylindrischer Teil
- 2b: Boden
- 2c: Hebelarm
- 3: Leiterplatte
- 4: Stecker
- 5: Kammer
- 6: Zylinder
- 7: erste Stufe
- 8: Rastnut
- 9: Rotorstruktur
- 10: Rohrstück
- 11: Haltezungen
- 12: Haltefinger
- 13: Kontaktzungen
- 14: O-Ring
- 15: Zweite Stufe
- 16: Rastnase
- 17: Nocken

## Patentansprüche

1. Niveausensor für ein Kraftfahrzeug, umfassend
ein Gehäuse (1),
einen an dem Gehäuse (1) drehbar gelagerter Rotor (2) und
eine von dem Gehäuse (1) zumindest teilweise umschlossene Leiterplatte (3), die einen Stator in Form von Leiterbahnstrukturen umfasst,
wobei das Gehäuse (1) einen außen angeformten Zylinder (6) mit kreisringförmigem Querschnitt aufweist,
wobei der Rotor (2) eine Rotorstruktur (9) aufweist, die an einer Außenseite eines Bodens (2b) des Rotors (2) angeordnet ist und mit dem Stator korrespondiert,
wobei der Rotor (2) mit Ausnahme der Rotorstruktur (9) aus Kunststoff gefertigt ist und
wobei der Rotor (2) in dem Zylinder (6) geführt und mit diesem verrastet ist, **dadurch gekennzeichnet, dass** der Zylinder (6) zu einer Kammer (5) des Gehäuses (1) durch deren Wandung geschlossen ist und
dass ein zylindrischer Teil (2a) des Rotors (2) drehbar in dem Zylinder (6) des Gehäuses (1) gelagert und verrastet ist,
wobei hierfür das Rohrstück (10) an einem oberen Ende des zylindrischen Teils (2a) derart angeformt ist, dass es mit einem einer Wanddicke des Zylinders (6) zuzüglich eines vorbestimmten Spiels entsprechenden Abstand einen oberen Bereich des zylindrischen Teils (2a) umgibt.

2. Niveausensor nach Anspruch 1, **dadurch gekennzeichnet, dass** außen an dem Zylinder (6) eine ringförmige Rastnut (8) eingelassen ist.

3. Niveausensor nach Anspruch 2, **dadurch gekennzeichnet, dass** an einem oberen, der Rotorstruktur (9) abgewandten Ende des Rotors (2) außen ein Rohrstück (10) angeformt ist, das an seinem unteren Ende eine mit der Rastnut (8) korrespondierende Rastnase (16) aufweist.

4. Niveausensor nach einem der Ansprüche 1 bis 3, **dadurch gekennzeichnet, dass** der Rotor (2) aus einem Kunststoff mit einem Anteil an eingebettetem Schmierstoff gefertigt ist.

5. Niveausensor nach einem der Ansprüche 1 bis 4, **dadurch gekennzeichnet, dass** an einer Innenwand des Zylinders (6) mindestens eine erste Stufe (7) gebildet ist.

6. Niveausensor nach einem der Ansprüche 1 bis 5, **dadurch gekennzeichnet, dass** außen an einem Mantel des zylindrischen Teils (2a) des Rotors (2) mindestens eine zweite Stufe (15) gebildet ist.

7. Niveausensor nach einem der Ansprüche 1 bis 6, **dadurch gekennzeichnet, dass** in dem zylindrischen Teil (2a) des Rotors (2) Rippen ausgebildet sind.

8. Niveausensor nach einem der Ansprüche 1 bis 7, **dadurch gekennzeichnet, dass** Flächen, an denen sich der Zylinder (6) und der Rotor (2) berühren, mit einem Schmiermittel versehen sind.

9. Niveausensor nach einem der Ansprüche 1 bis 8, **dadurch gekennzeichnet, dass** auf einem oberen Ende des Zylinders (6) und in einem Übergang zwischen dem zylindrischen Teil (2a) des Rotors und einem Rohrstück (10) jeweils ein ringförmiger Nocken (17) angeformt ist.

## Claims

1. Level sensor for a motor vehicle, comprising
a housing (1),
a rotor (2) pivot-mounted on the housing (1) and a printed circuit-board (3) being at least partially enclosed by the housing (1) and comprising a stator in the shape of printed circuit-board-structures, wherein the housing (1) has a cylinder (6) with a circular-ring shaped cross-section, molded-on on the outside,
wherein the rotor (2) has a rotor-structure (9) being arranged on an outside of a bottom (2b) of the rotor (2) and corresponds with the stator,
wherein the rotor (2), with the exception of the rotor structure (9), is made from plastic material, and wherein the rotor (2) is guided in the cylinder (6) and is snap-fastened to it,
**characterized in that** the cylinder (6) is closed toward a chamber (5) of the housing (1) by its wall and that a cylindrical part (2a) of the rotor (2) is pivot-mounted in and snap-fastened to the cylinder (6) of the housing (1),
wherein, to this end, the tube section (10) is molded-on on an upper end of the cylindrical part (2a) in such a manner, that it encloses an upper area of the cylindrical part (2a) at a distance of a wall thickness of the cylinder (6) plus a predetermined play.

2. Level sensor according to Claim 1, **characterized in that** a ring-shaped latching groove (8) is molded-on to an upper part of the cylindrical part (2a).

3. Level sensor according to Claim 2, **characterized in that** on an upper end of the rotor (2) facing away from the rotor structure (9), a tube section (10) having a latching detent (16) at its lower end which corresponds to the latching groove (8), is molded onto the outside.

4. Level sensor according to one of the Claims 1 to 3, **characterized in that** the rotor (2) is made from a plastic material with a proportion of embedded lubricant.

5. Level sensor according to one of the Claims 1 to 4, **characterized in that** on an inner wall of the cylinder (6) at least one first step (7) is formed.

6. Level sensor according to one of the Claims 1 to 5, **characterized in that** at least one second step (15) is formed on the outside of a jacket of the cylindrical part (2a) of the rotor (2).

7. Level sensor according to one of the Claims 1 to 6, **characterized in that** ribs are formed in the cylindrical part (2a) of the rotor (2).

8. Level sensor according to one of the Claims 1 to 7, **characterized in that** faces on which the cylinder (6) and the rotor (2) touch, are provided with a lubricant.

9. Level sensor according to one of the Claims 1 to 8, **characterized in that** a ring-shaped cam (17) each is molded-on on an upper end of the cylinder (6) and in a transition area between the cylindrical part (2a) of the rotor and a tube section (10).

## Revendications

1. Capteur de niveau véhicule pour un véhicule automobile, comprenant
un boîtier (1),
un rotor (2) pivotant sur le boîtier (1) et un circuit imprimé (3) entouré au moins partiellement par le boîtier (1), qui comprend un stator sous forme de structures de pistes conductrices, le boîtier (1) présentant un cylindre (6) formé à l'extérieur à section transversale de forme circulaire,
le rotor (2) présentant une structure de rotor (9) qui est disposée sur un côté extérieur d'un sol (2b) du rotor (2) et qui correspond au stator,
le rotor (2) étant fabriqué en matière plastique, à l'exception de la structure de rotor (9) et
le rotor (2) étant conduit dans le cylindre (6) et verrouillé avec celui-ci, **caractérisé en ce que**
le cylindre (6) est fermé vers une chambre (5) du boîtier (1) par le biais de sa paroi et
qu'une partie cylindrique (2a) du rotor (2) est pivotante et verrouillée dans le cylindre (6) du boîtier (1),
pour cela la pièce tubulaire (10) étant formée sur une extrémité supérieure de la partie cylindrique (2a) de telle manière qu'elle entoure une partie supérieure de la partie cylindrique (2a) à une distance correspondante à une épaisseur de la paroi du cylindre (6) avec un jeu déterminé en plus.

2. Capteur de niveau véhicule selon la revendication 1, **caractérisé en ce qu**'une rainure d'encliquetage circulaire (8) est insérée à l'extérieur du cylindre (6).

3. Capteur de niveau véhicule selon la revendication 2, **caractérisé en ce que** sur une extrémité supérieure du rotor (2) opposée à la structure de rotor (2) une pièce tubulaire (10) étant formée à l'extérieur qui présente un ergot d'encliquetage (16) correspondant à la rainure d'encliquetage (8) sur son extrémité inférieure.

4. Capteur de niveau véhicule selon l'une des revendications 1 à 3, **caractérisé en ce que** le rotor (2) est réalisé d'une matière plastique avec une part de lubrifiant intégré.

5. Capteur de niveau véhicule selon l'une des revendications 1 à 4, **caractérisé en ce que** sur un côté intérieur du cylindre (6) au moins une première marche (7) est formée.

6. Capteur de niveau véhicule selon l'une des revendications 1 à 5, **caractérisé en ce que** sur une gaine de la partie cylindrique (2a) du rotor (2) à l'extérieur au moins une deuxième marche (15) est formée.

7. Capteur de niveau véhicule selon l'une des revendications 1 à 6, **caractérisé en ce que** des nervures sont formées dans la partie cylindrique (2a) du rotor (2).

8. Capteur de niveau véhicule selon l'une des revendications 1 à 7, **caractérisé en ce que** des surfaces sur lesquelles le cylindre (6) et le rotor (2) sont en contact sont pourvues d'un lubrifiant.

9. Capteur de niveau véhicule selon l'une des revendications 1 à 8, **caractérisé en ce que** sur une extrémité supérieure du cylindre (6) et dans un passage entre la partie cylindrique (2a) du rotor et d'une pièce tubulaire (10) une came circulaire (17) est formée chaque fois.
